**Europäisches Patentamt**

**European Patent Office**

**Office européen des brevets**

(19)

(11) Veröffentlichungsnummer: **0 083 341**
**B1**

(12)

# EUROPÄISCHE PATENTSCHRIFT

(45) Veröffentlichungstag der Patentschrift:
**10.12.86**

(51) Int. Cl.⁴: **G 01 F 9/00**

(21) Anmeldenummer: **82901112.1**

(22) Anmeldetag: **31.03.82**

(86) Internationale Anmeldenummer:
**PCT/DE 82/00075**

(87) Internationale Veröffentlichungsnummer:
**WO 83/00221  (20.01.83 Gazette 83/2)**

(54) **EINRICHTUNG ZUR KRAFTSTOFFVERBRAUCHSMESSUNG BEI EINER BRENNKRAFTMASCHINE.**

(30) Priorität: **09.07.81  DE 3127123**

(43) Veröffentlichungstag der Anmeldung:
**13.07.83 Patentblatt 83/28**

(45) Bekanntmachung des Hinweises auf die Patenterteilung:
**10.12.86 Patentblatt 86/50**

(84) Benannte Vertragsstaaten:
**DE FR GB**

(56) Entgegenhaltungen:
**GB - A - 2 003 546**
**US - A - 3 252 322**
**US - A - 3 512 600**
**US - A - 3 672 394**

(73) Patentinhaber: **ROBERT BOSCH GMBH, Postfach 50,
D-7000 Stuttgart 1 (DE)**

(72) Erfinder: **RIESENBERG, Klaus, Wiesenstrasse 16/2,
D-7140 Ludwigsburg (DE)**

EP 0 083 341 B1

## Beschreibung

Die Erfindung geht aus von einer Einrichtung zur Kraftstoffverbrauchsmessung nach der Gattung des Hauptanspruchs. Kraftstoffpumpen benötigen heutzutage aufgrund ihrer Dimensionierung ein Wärmeableitmedium. Dazu dient der zu fördernde Kraftstoff, der somit während seines Pumpendurchlaufes erwärmt wird. Damit keine Gasblasen im Kraftstoff aufgrund einer zu grossen Erwärmung entstehen, ist es erforderlich, die Pumpe mit einer höheren Kraftstoffmenge zu spülen, als der Brennkraftmaschine zugeführt werden muss. Bei dieser erhöhten Fördermenge der Pumpe stellt sich dann jedoch das Problem der genauen Verbrauchsmessung, weil sich der Verbrauch letztlich aus Fördermenge minus Rücklaufmenge ergibt.

Aus der US-A-3 512 600 ist eine Einrichtung zur Kraftstoffmengenmessung mit einem äusseren und einem inneren Kraftstoffkreislauf bekannt. Das Kraftstoffmessgerät wird immer nur zum Zwecke einer Kraftstoffmengenmessung von Kraftstoff durchflossen. In diesem Fall ist der innere Kreislauf geschlossen, und der zurückfliessende Kraftstoff gelangt nicht zum Tank, sondern wieder zur Pumpe zurück. Zur Umschaltung vom inneren auf den äusseren Kreislauf sind zwei Ventile vorgesehen.

Nachteilig an der bekannten Einrichtung ist die durch den erhöhten Bauteileaufwand bedingte Störanfälligkeit und das daraus resultierende Sicherheitsrisiko. Zudem kann die Durchflussmessung durch das Zuschalten des Messgerätes in den Kraftstoffkreislauf infolge dynamischer Vorgänge in der Kraftstoffleitung verfälscht werden.

Die erfindungsgemässe Einrichtung zur Kraftstoffverbrauchsmessung besteht ebenfalls aus einem inneren und einem äusseren Kraftstoffkreislauf. Das Durchflussmessgerät wird jedoch ständig von Kraftstoff durchflossen. Zudem wird — nach Umschalten auf den inneren Kreislauf — erst dann ein Messwert ermittelt, wenn die dynamischen Vorgänge in der Kraftstoffleitung abgeklungen sind. Die Verwendung nur eines Ventils zur Umschaltung vom äusseren auf den inneren Kraftstoffkreislauf senkt ausserdem die Störanfälligkeit und trägt somit zu einer Verminderung des Sicherheitsrisikos bei.

Die Erfindung ist im wesentlichen durch den Patentanspruch 1 gekennzeichnet. Der Patentanspruch 2 enthält eine weitere Ausgestaltung.

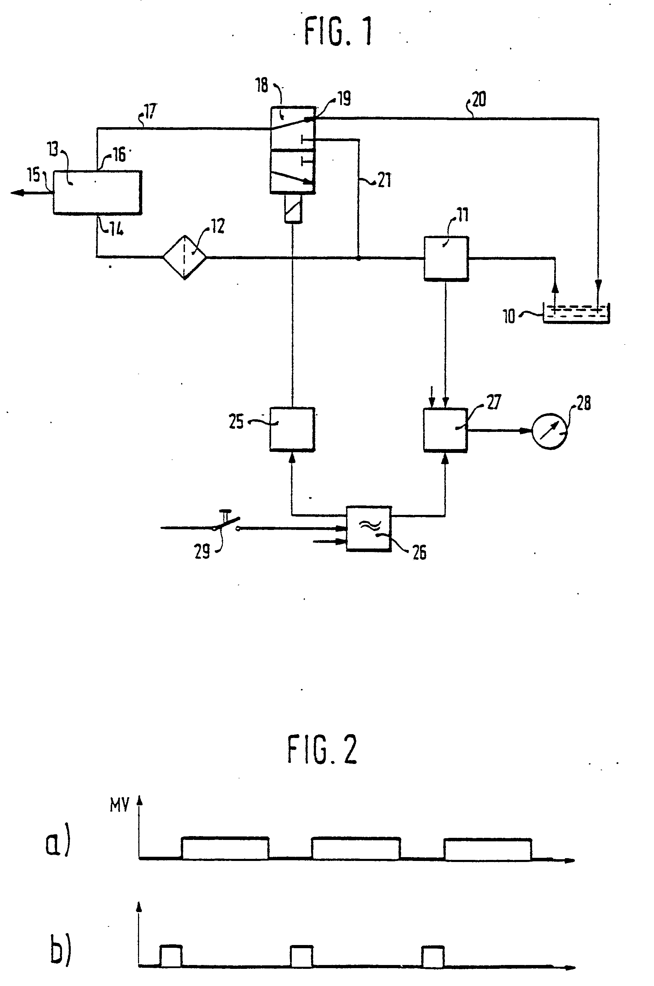

Ein Ausführungsbeispiel der Erfindung ist in der Zeichnung dargestellt und wird im folgenden näher beschrieben und erläutert. Es zeigen Fig. 1 eine Prinzipdarstellung der Einrichtung zur Kraftstoffverbrauchsmessung und Fig. 2 ein Impulsdiagramm bezüglich der einzelnen Einrichtungsteile.

## Beschreibung des Ausführungsbeispieles

Die Erfindung betrifft eine Einrichtung zur Kraftstoffverbrauchsmessung bei einer Brennkraftmaschine mit Selbstzündung. Mit 10 ist der Kraftstofftank bezeichnet, mit 11 ein Durchflussmengenmessgerät, mit 12 ein Kraftstofffilter und mit 13 die Kraftstoffpumpe. Diese Kraftstoffpumpe weist einen Zulaufanschluss 14 auf, ferner einen Hochdruckanschluss 15 und schliesslich einen Rücklaufanschluss 16. Über den Hochdruckanschluss 15 ist die Pumpe 13 in bekannter Weise mit einer Einspritzdüse verbunden.

In einer beim Rücklaufanschluss 16 beginnenden Rücklaufleitung 17 liegt ein elektromagnetisch betätigbares 3/2-Wegeventil 18, dessen normalerweise durchgeschalteter Ausgang 19 mit einer Tank-Rücklaufleitung 20 gekoppelt ist und dessen zweiter Ausgangsanschluss über ein besonderes Leitungsstück 21 mit der Verbindungsstelle von Durchflussmesser 11 und Filter 12 gekoppelt ist.

Die Erregerwicklung des Ventils 18 erhält Ansteuersignale aus einem Zeitglied 25, das wiederum von einer Zeitsignalerzeugerstufe 26 getriggert wird. Im einfachsten Fall besteht das Zeitglied 25 aus einer monostabilen Kippstufe. Des weiteren steht die Zeitsignalerzeugerstufe 26 mit einer Verbrauchsrecheneinrichtung 27 in Verbindung, die zusätzlich Signale vom Durchflussmengenmesser 11 erhält. Die Verbrauchsrecheneinrichtung 27 verarbeitet zu bestimmten Zeiten das Ausgangssignal des Durchflussmessers 11 und bringt den Verbrauchswert entweder zeit- oder streckenbezogen in einem Sichtgerät oder Instrument 28 zur Anzeige.

Fig. 2a zeigt das Ansteuersignal für die Erregerwicklung des Ventils 18. In Fig. 2b ist eine Signalfolge wiedergegeben, während deren Impulsdauer das Ausgangssignal des Durchflussmessgerätes 11 zum Bestimmen des Kraftstoffverbrauchs verarbeitet wird.

Erkennbar ist aus der Darstellung von Fig. 1, dass im Ruhezustand der Kraftstoff aus dem Tank durch das Durchflussmessgerät 11 und das Filter 12 zur Kraftstoffpumpe 13 gelangt und von dort die Spülmenge über die Rücklaufleitung 17, das Ventil 18 und die Tankrücklaufleitung 20 in den Tank 10 zurückfliesst. Mittels des umschaltbaren 3/2-Wegeventils lässt sich ein Kraftstoffkreislauf bilden, der das Filter 12, die Pumpe 13 und das Ventil 18 umfasst. Aufgrund der weitgehenden Inkompressibilität des Kraftstoffs im Fall dieses «inneren» Kraftstoffkreislaufes wird nur diejenige Kraftstoffmenge aus dem Tank 10 entnommen, die über den Hochdruckanschluss 15 den Einspritzdüsen der Brennkraftmaschine zugeführt wird. Dieser Zustand kann zwar aus Erwärmungsgründen des Kraftstoffs nicht allzu lange aufrechterhalten bleiben, doch genügt in der Regel diese Zeitdauer, um eine Verbrauchsmessung durchzuführen. Erkennbar ist durch einen Vergleich der Darstellungen in Fig. 2a und b, dass die Signalverarbeitung für die Verbrauchsmessung erst nach einer gewissen Zeitdauer nach dem Umschalten des Ventils 18 beginnt, und natürlich spätestens mit dem Umschalten des Ventils 18 endet.

Wann die Triggerstufe 26 ein Ausgangssignal zum Einleiten des Messvorganges abgibt, ist eine Frage des Einzelfalls. Neben Messungen in gleichbleibenden Zeitabständen sind auch solche abhängig von Betriebskenngrössen wie Drehzahl oder Beschleunigung möglich. Darüber hinaus ist es auch zweckmässig, diesen Messvorgang mittels eines Schalters 29, der im Fahrgastraum des Fahrzeugs untergebracht ist, auszulösen.

Die Einzelelemente der in Fig. 1 dargestellten Einrichtung zur Kraftstoffverbrauchsmessung sind als solche dem Fachmann bekannt und bedürfen daher an dieser Stelle keiner näheren Erläuterung. Es hat sich gezeigt, dass die gezeigte Einrichtung trotz ihrer Einfachheit befriedigende Messergebnisse zu liefern vermag und sich daher insbesondere auch für den Serieneinsatz hervorragend eignet.

## Patentansprüche

1. Einrichtung zur Kraftstoffverbrauchsmessung bei einer Brennkraftmaschine mit einer Serienschaltung bestehend aus einem Kraftstofftank (10), einem Durchflussmessgerät (11) und einer Kraftstoffpumpe (13), die mit Hilfe einer Zulaufleitung miteinander verbunden sind, mit einer Rücklaufleitung (17, 20) von der Kraftstoffpumpe (13) zum Kraftstofftank (10) (äusserer Kraftstoffkreislauf) und mit einer Rücklaufleitung (17, 21) von der Kraftstoffpumpe (13) zu einem Punkt der Zulaufleitung zwischen dem Durchflussmessgerät (11) und der Kraftstoffpumpe (13) (innerer Kraftstoffkreislauf), sowie mit einer Einrichtung zur Umschaltung (18) des Rücklaufs von der Kraftstoffpumpe entweder zum Kraftstofftank (17, 20) (äusserer Kraftstoffkreislauf) oder zu einem Punkt der Zulaufleitung zwischen dem Durchflussmessgerät und der Kraftstoffpumpe (17, 21) (innerer Kraftstoffkreislauf), dadurch gekennzeichnet, dass das Durchflussmessgerät (11) sowohl von Kraftstoff durchflossen wird, wenn die Umschalteinrichtung (18) die Rücklaufleitung (17) mit der Tank-Rücklaufleitung (20) verbindet, als auch dann – in verringertem Masse – wenn die Umschalteinrichtung die Rücklaufleitung (17) mit dem Punkt der Zulaufleitung zwischen dem Durchflussmessgerät (11) und der Kraftstoffpumpe (13) (21; innerer Kraftstoffkreislauf) verbindet, dass jedoch eine an sich bekannte Auswerteschaltung (27) für das Durchflussmessgerät (11) nur gegen Ende der Zeitphase, in der die Rücklaufleitung der Kraftstoffpumpe (13) über die einzige Einrichtung zur Umschaltung (18) mit einem Punkt der Zulaufleitung zwischen dem Durchflussmessgerät (11) und der Kraftstoffpumpe (13) verbunden ist (innerer Kraftstoffkreislauf geschlossen), ein Signal bezüglich des Kraftstoffverbrauchs der Brennkraftmaschine bildet.

2. Einrichtung nach Anspruch 1, dadurch gekennzeichnet, dass die Umschaltung (18) des Rücklaufs mittels eines elektromagnetisch betätigbaren 3/2-Wegeventils erfolgt.

## Claims

1. Apparatus for fuel consumption measurement in an internal combustion engine with a series circuit consisting of a fuel tank (10), a flow meter (11) and a fuel pump (13), which are connected to one another with the aid of a supply line, having a return line (17, 20) from the fuel pump (13) to the fuel tank (10) (outer fuel circuit) and having a return line (17, 21) from the fuel pump (13) to a point of the supply line between the flow meter (11) and the fuel pump (13) (inner fuel circuit), and also having a device for changeover (18) of the return from the fuel pump either to the fuel tank (17, 20) (outer fuel circuit) or to a point of the supply line between the flow meter and the fuel pump (17, 21) (inner fuel circuit), characterized in that the flow meter (11) has fuel flowing through it both when the changeover device (18) connects the return line (17) to the tank return line (20) and – to a reduced extent – when the changeover device connects the return line (17) to the point of the supply line between the flow meter (11) and the fuel pump (13) (21; inner fuel circuit), but in that an evaluation circuit (27), known per se, for the flow meter (11) forms a signal with respect to the fuel consumption of the internal combustion engine only toward the end of the time phase in which the return line of the fuel pump (13) is connected via the single device for changeover (18) to a point of the supply line between the flow meter (11) and the fuel pump (13) (inner fuel circuit closed).

2. Apparatus according to Claim 1, characterised in that the changeover (18) of the return is performed by means of an electromagnetically operable 3/2-way valve.

## Revendications

1. Dispositif pour mesurer la consommation de carburant d'un moteur à combustion interne, dispositif comportant un montage en série constitué d'un réservoir de carburant (10), d'un appareil de mesure du débit (11), et d'une pompe de carburant (13), qui sont reliés ensemble à l'aide d'une canalisation d'arrivée, le dispositif comportant une canalisation de retour (17, 20) allant de la pompe de carburant (13) au réservoir de carburant (10) (circuit externe de carburant), et une canalisation de retour (17, 21) allant de la pompe de carburant (13) à un point de la canalisation d'arrivée, entre l'appareil de mesure du débit (11) et la pompe de carburant (13) (circuit interne de carburant), et comportant également un moyen pour commuter (18) le retour de la pompe de carburant, soit vers le réservoir de carburant (17, 20) (circuit externe de carburant), soit vers un point de la canalisation d'arrivée entre l'appareil de mesure du débit et la pompe de carburant (17, 21) (circuit interne de carburant), dispositif caractérisé en ce que l'appareil de mesure du débit (11), tout comme il est traversé par le carburant lorsque le moyen de commutation (18) relie la canalisation de retour (17) avec la canalisation de retour au réservoir (20), est également traversé par le carburant, mais dans une moindre mesure, lorsque le moyen de commutation relie la canalisation de retour (17) au point de la canalisation d'arrivée entre l'appareil de mesure du débit (11) et la pompe de carburant (13) (21; circuit interne de carburant), cependant qu'un circuit d'exploitation connu en soi (27) pour l'appareil de mesure du débit (11) n'élabore un signal en ce qui concerne la consommation de carburant du moteur à combustion interne, que vers la fin de la période de temps pendant laquelle la canalisation de retour de la pompe de carburant (13) est reliée par l'intermédiaire du moyen unique de commutation (18) avec un point de la canalisation d'arrivée entre l'appareil de mesure de débit (11) et la pompe de carburant (13) (circuit interne de carburant fermé).

2. Dispositif selon la revendication 1, caractérisé en ce que la commutation (18) du retour s'effectue au moyen d'une vanne à trois/deux voies susceptible d'être actionnée électromagnétiquement.

## FIG. 1

## FIG. 2